# EUROPEAN PATENT APPLICATION

(11) **EP 2 636 980 A1**
(43) Date of publication of application: **11.09.2013**
(21) Application number: 12158224.1
(22) Date of filing: 06.03.2012
(51) Int. Cl.: F28D 1/03, F28D 20/02, B60H 1/00

(54) **Heat exchanger with two refrigerants**

(71) Applicant: Delphi Automotive Systems Luxembourg SA, 4940 Bascharage (LU)
(72) Inventor: Berger, Thierry, 57100 Thionville (FR); Biver, Philippe, 4804 Rodange (LU)
(74) Representative: Allain, Michel Jean Camille

(57) **Abstract**

A heat exchanger (10) for an air conditioning system, comprising a joined stack of parallel flat tubes (12) interconnected so a refrigerant is able to circulate inside the flat tubes (12) transferring from one to the other until exiting the heat exchanger (10) and, a container (16) interposed between the two flat tubes (12) and in thermal contact with the tubes (12), a phase change material being in the containers (16).

The container (16) is provided with a width adjusting mean so the thermal contact with the flat tubes (12) is optimized.

## Description

### TECHNICAL FIELD

The present invention relates to a heat exchanger having phase change material interposed between each flat tube of the heat exchanger.

### BACKGROUND OF THE INVENTION

Heat exchangers typically comprise a plurality of interconnected parallel flat tubes in-between which corrugated fins are brazed, a refrigerant flowing in the flat tubes. To enable cooling when the engine of a hybrid vehicle stops, a new generation of heat exchangers has been developed comprising containers filled with a phase change material [PCM] such as wax and arranged in thermal contact with the fins. In US 2010/0313587 A1 Wolfe et al. disclose such a new heat exchanger.

Inside the containers, internal fins are arranged in order to facilitate the thermal transfer from the periphery of the container to the heart of it.

When the engine runs, the refrigerant circulates cooling the fins and air flowing through them, and cooling as well the PCM so it solidifies. When the engine stops, the refrigerant stops circulating and so the PCM heats up and liquefies restituting the stored cold to the fins and to the air flow pursuing cooling the vehicle interior.

The new heat exchanger is a stack of shaped and holed metal sheets placed face to face by pair. The stack is brazed in a furnace and the components are joined together. The flat tubes create a leak-free circuit within which the refrigerant flows. The PCM is placed and retained inside leak-free containers in optimum heat transfer contact with the flat tubes and the fins. The refrigerants and the PCM do not mix.

During the brazing operation the flux melts and the overall stack length decreases by few millimeters jeopardizing the correct sealing of the heat exchanger. Indeed, on one hand each flat tube must be in intimate contact with the next flat tube for creating the refrigerant circuit and on the other hand, the containers have to be in contact with the flat tubes for enabling thermal transfer. Both conditions may not be satisfied resulting in multiple end-of-line checks and leak testing.

### SUMMARY OF THE INVENTION

Accordingly, it is an object of the present invention to provide a solution to this problem by proposing a leak free heat exchanger for an air conditioning system, the heat exchanger comprising plurality of parallel flat tubes interconnected so that a refrigerant is able to circulate inside the flat tubes transferring from one to the other until exiting the heat exchanger and comprising at least one container interposed between two adj acent flat tubes and in thermal contact with said adjacent flat tubes, a phase change material (PCM) being arranged in the container.

The container is provided with a width adjusting mean so the thermal contact with the flat tubes is optimized.

The container comprises a first part having a first main wall surrounded by a first peripheral end wall and a second part having a second main wall surrounded by a second peripheral end wall. The first and the second end walls overlap so the width of the container measured over the two main walls, is adjustable to the distance between the two flat tubes and in doing so, advantageously optimizing the thermal contact between the container and the flat tubes.

The first and the second peripheral end walls have complementary inclined surfaces for a mutual male-female engagement so enabling adjustment of the width of the container. In a first embodiment, the first peripheral wall is outwardly inclined so slightly widening as extending from the first main wall and, the second peripheral wall is inwardly inclined so slightly reducing as extending from the second main wall. In a further embodiment, the second peripheral wall has substantially a U-shape comprising a foot portion perpendicularly extending from the second main wall, continued in an outwardly curved portion making almost a half-turn, ended in a straight final portion extending from the curve to a distal edge, the final section being inclined and slightly widening as extending from the curve to the distal edge. All embodiments enable a mutual male-female engagement enabling adjustment of the width of the container.

The inclination of the first and second peripheral wall, relative to the transverse axis is inferior to 20 degrees. The angle of inclination has to ease the first and second peripheral engagement but it has to be small enough so the width adjustment can take place as one wall will slide relative to the other one.

Generally the heat exchanger comprises a plurality of interposed interconnected containers enabling to fill all containers by pouring the phase change material in the liquid state in only one of them. More particularly, the flat tubes interconnect with each other along a transverse direction and, the containers interconnect with each other via a passage that extends through the flat tubes along the same transverse direction.

In a plate heat exchanger, the flat tube is the assembly of a pair of long shaped metal sheets, the plates, arranged face to face and joined together along there perimeter so defining an interior volume within which the first fluid may flow. More precisely, the tubes and containers are joined by brazing.

More precisely, the PCM which for instance can be a wax absorbs energy and solidifies when being cooled by the refrigerant that circulates inside the flat tubes and restores the energy and liquefies when the refrigerant does not circulate.

The invention is also about a method for manufacturing a heat exchanger for an air conditioning system, the method comprising the steps of providing two flat tubes able to be in fluid connection; providing a container having a width adjusting mean, so to be interposed between the two flat tubes in thermal contact with them; spraying brazing flux on the flat tubes and on the container; stacking the flat tubes and the container interposing the container between the flat tubes; ensuring the overall length of the stack is slightly longer than the desired length of the finished heat exchanger; brazing the stack, the flux melting and the adjusting mean, of the container enabling the stack to slightly adjust to the desired length.

To provide the flat tubes these steps have to executed: forming in a long flat metal sheets a concave area with a flat bottom, the concave area being surrounded by a plane border; forming in the long metal sheet a communication hole surrounded by a surface outwardly protruding from the flat bottom of the concave area; forming in the long metal sheet a passage hole surrounded by a plane; forming the flat tube by arranging the long flat metal sheets face-to-face and border-to-border, the flat bottoms being distant from each other so the concave areas define an interior volume and the passage holes are in close proximity.

To provide a container these steps have to be executed: forming in a first short flat metal sheet a concave area with a flat bottom surrounded by an inclined first peripheral end wall; forming in a second short flat metal sheet a concave area with a flat bottom surrounded by a inclined second peripheral wall complementary to the first end wall; forming, in each short metal sheet, a connecting hole surrounded by a surface outwardly protruding from the concave area and,
forming a container by arranging the short metal sheets, face to face so the flat bottoms are distant from each other so, the concave areas defining an interior volume for the container, and the inclined end walls, engaging in a male-female complementary match, the connecting holes outwardly protruding from the container.

Forming an inclined second peripheral wall, comprise the step of: forming the second peripheral wall with a substantially U-shape having a foot portion continued in an outwardly curved portion making almost a half-turn and ended in a straight final portion extending from the curve to a distal edge, the final section being inclined A and slightly widening as extending from the curve to the distal edge.

Providing a container may further comprise the step of providing internal fins which have a free height larger than the internal dimension of the container and arranging them inside the container so to be in thermal contact with the container. The internal fins are typically made in thin aluminium corrugated strip and there shape self-adapt to the internal dimension of the container without resisting to the width adjustment of the container.

For making a multi tube, multi containers heat exchanger the step of stacking-up the flat tubes and the containers should be repeated so the stack comprises a plurality of tubes and interposed containers.

### BRIEF DESCRIPTION OF THE DRAWINGS

The present invention is now described by way of example with reference to the accompanying drawings in which:
Figure 1 is an isometric view of a plate heat exchanger as per the invention.
Figure 2 is a section of the heat exchanger of Figure 1 along a profile plan passing between two flat tubes.
Figure 3 is an isometric view of a container of the heat exchanger of Figures 1, 2.
Figure 4 is a detail of the container of Figure 3.
Figures 5 is a horizontal section of the heat exchanger of Figure 1.

### DESCRIPTION OF THE PREFERRED EMBODIMENTS

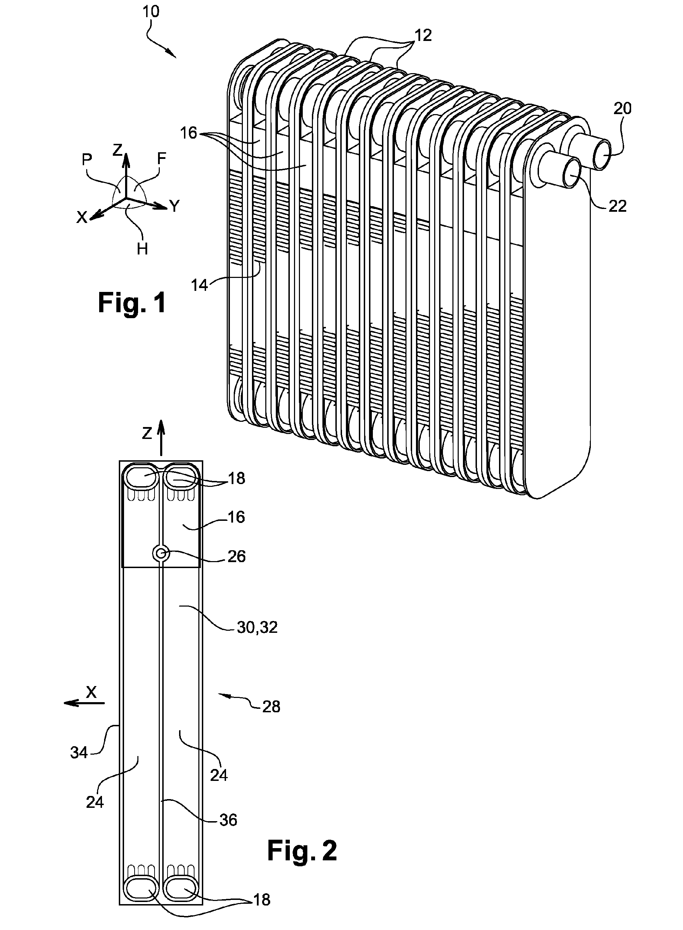

In Figure 1 a plate heat exchanger 10 as per the invention is represented and positioned in a tri-axial system, longitudinal axis X, transverse axis Y and vertical axis Z. The heat exchanger 10 comprises a plurality of flat tubes 12 in-between which are arranged corrugated fins 14 and flat containers 16.

To ease the description and without any intent to limit the scope of the invention the following vocabulary are utilized in reference to the vertical orientation Z as shown on Figure 1 : "bottom", "top" "over" "under" "above" "below". Also, "facial" F designates the plan normal to the longitudinal axis X, "profile" P designates the plan normal to the transverse axis Y and "horizontal" H designates the plan normal to the vertical axis Z. Furthermore, the adjective "flat" qualifies the tubes 12 and the containers 14 both having plane, or flat, surfaces in the profile plan P. These flat surfaces enable a large area of contact between the tubes 12 and the fins 14 and between the tubes 12 and the containers 16 so maximizing the heat transfer between them.

The containers 16 are placed in the vicinity of the extremity of the tubes 12 as indicated on the profile section of Figure 2. The flat tubes 12 are interconnected through four communication holes 18 aligned in the transverse direction Y making four parallel connecting passages throughout the length of the heat exchanger 10. Inside the heat exchanger 10, a refrigerant flows from an inlet 20 to an outlet 22 in following a flow circuit 24 inside the tubes 12 transferring from tube to tube via the communication holes 18.

The interposed containers 16 are interconnected though a transverse connecting hole 24 creating a passage for a phase-change-material (PCM). The PCM does not normally circulate and it remains still inside the containers 16. The containers' interconnection 26 is only utilized when filling the PCM by pouring in only one container 16 then transferring to the other containers 16. The refrigerant and the PCM do not mix as the flow circuit 24 and the containers 16 are independent.

The PCM typically liquefies above 5°C and solidifies below 5°C. This 5°C threshold should only be viewed as an example, not a limitation. In other applications another value, such as 2°C or 10°C, may be chosen. When filling the containers at room temperature, the PCM is liquid. Wax is an example of such PCM.

The description is limited to plate heat exchangers having, such as on Figure 1, one container between each pair of tubes. Alternative embodiments, for instance with two containers between each pair of tubes, are easily accessible to the person skilled in the art. In such alternative embodiment the corrugated fins are limited to the central area between the containers. Also, embodiments where the containers are independently filled and thus are not interconnected can also be derived from the present description.

As visible on Figure 2, the communication passage 26 between the containers extends through the flat tubes 12 and consequently the flat tubes 12 are provided with four communication holes 18 for the flow circuit 24 and one orifice 26, or passage, for the containers' interconnection.

A possible alternative is to extend the container upward so that the communication holes 18 extend through the containers. This is sketched on Figure 2 where the contour of the container goes over two communication holes 18.

To constitute the flat tubes 12, long metal sheets 28 are formed and shaped so having a concave area 30 with a flat bottom 32.

Throughout the description, the adjective "long" qualifies the metal sheets of the flat tubes, referring to a much lengthier vertical dimension than along the two other axes. "Short" will also be utilized qualifying the metal sheets for making the containers that, as sketched on Figure 2, have a much shorter vertical dimension than the "long" sheets.

The perimeter 34 of the long sheets 28 remains plane and each of the four inter-tubes communication hole is surrounded by a surface outwardly protruding from the concave area 30. The inter-containers passage 26 is operated in the central area and is also surrounded by a plane surface.

The concave area 30 corresponds to the intra-tube flow circuit 24. Numerous alternatives of flow circuit geometry exist and to illustrate the description the embodiment chosen, as visible on Figure 2, corresponds to a pair of parallel vertical channels, the refrigerant flowing from the inlet 20 through all the left channels then flowing back toward the outlet 22 via all the right channels. The two channels are separated by a median border 36 that locally surrounds the orifice 26 for the containers' interconnection. Anyway, the present invention is independent of the flow circuit geometry.

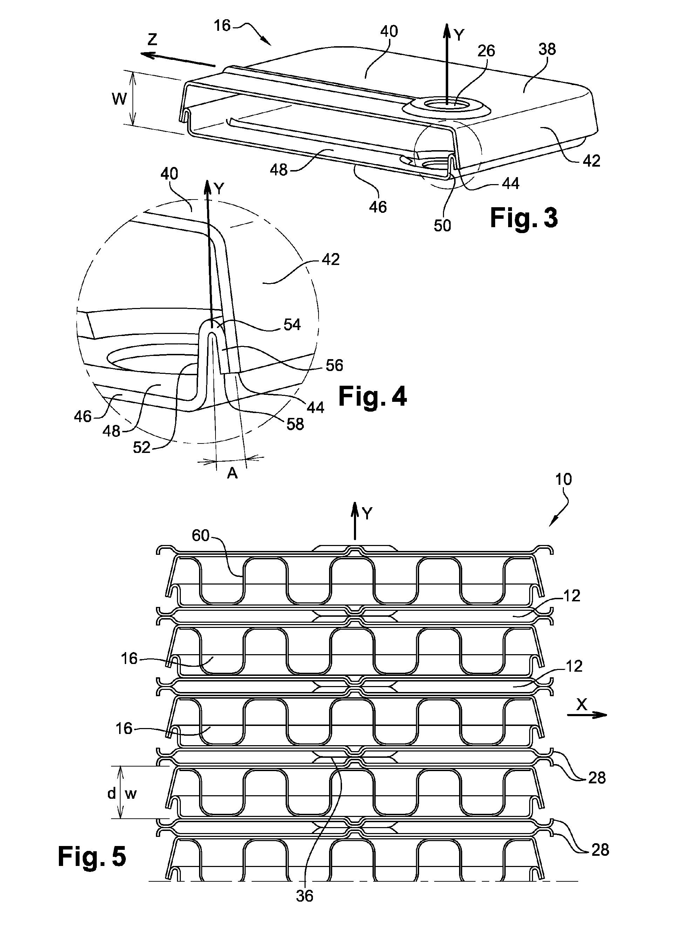

Referring now to Figure 3 and the detail of Figure 4, the structure of the flat containers 16 is described. Each container 16 is the arrangement of two formed short metal sheets assembled in a male-female complementary engagement like a box and its cover.

The first short metal sheet 38 has a first flat main wall 40 surrounded by an outwardly inclined first peripheral wall 42 extending up to a first distal edge 44. Relative to the transverse axis Y, that is perpendicular to the first main wall 40, the inclination A of the first wall 40 is inferior to 20° degrees.

A second short metal sheet 46 has a second flat main wall 48 surrounded by a second peripheral wall 50 that comprises three portions: a foot portion 52 extending perpendicularly to the second main wall 48 and followed by an outwardly curved portion 54 making almost a U-turn and continued by a final straight portion 56, extending to a second distal edge 58. Relative to the transverse axis Y, that is perpendicular to the second main wall 48, the inclination A of the final straight portion 56 is inferior to 20° degrees.

To interconnect the containers 16, holes are arranged in the first main wall 40 and in the second main wall 48.

As shown on Figure 4, the inclination A of the first and of the second peripheral wall enables a complementary engagement of the first and second short sheets. The first peripheral wall 42 overlaps the second peripheral wall 50 so the first peripheral wall 42 and the final straight portion 56 of the second peripheral wall 50 are in surface contact edge 44 to edge 58.

Multiple alternatives can be developed for forming the first and second short sheets making the containers. The key factor is to enable the overlap male-female engagement. For instance the second short sheet could, instead of a U-shape peripheral wall, be provided with a one-leg inwardly inclined shot wall, that would match the inclination of the first wall.

As shown on Figure 5, the plate heat exchanger 10 is finally assembled as the stack of alternating long and short pair of metal sheets. In view of the brazing operation the metal sheets and the fins 14 are covered with brazing flux. A first pair of long sheets 28 is arranged face-to-face, concave areas 30 facing each other so defining the interior volume of the tube 12. A pair of short sheets 38, 46, is then arranged in like box and cover as detailed above. Internal fins 60 are arranged inside the containers in contact with the inner surface of the first short sheet 38 and the inner surface of the second short sheet 46. The inner fins 60 provide a thermal transfer path from the wall of the container 16 to the heart of it, improving the efficiency of the PCM either solidifying or liquefying. For this purpose, the internal fins 60 are typically made material that transfer heat easily such as aluminium. Other possibilities exist.

The connection hole 26 of the container 16 is set aligned to the passage operated in the long sheets 28. A further pair of long sheets 28 is arranged so the container 16 is now between two flat tubes 12. The four communication holes 18 of the first tube must be aligned and in contact with the four communication holes of the second tube. The assembly of the heat exchanger 10 continues alternating tubes 12 and containers 16 until the last tube 12.

The described stack provides a first contact between the tubes via their respective four communication holes 18, and a second contact between the containers 16 via the connection holes 26, and a third contact between the tube 12 and the containers 16 via the flat walls 32, 40, 48.

When joined by brazing in a furnace the flux present on the metal sheets and on the fins melts and the overall length of the stack slightly decreases. To ensure a good quality joining and a leak proof assembly it is essential that the length variation gets compensated. The overlap of the first 40 and second 46 short metal sheets enables the male-female engagement to adjust so the width w of the container 16 measured over the main walls 40, 48, along the transverse axis Y exactly equals to the inter-tube distance d. Also, the inner fins 60 are made in thin strip and they easily adapt in shape so they do not resist to the containers' width adjustment during brazing. For instance, prior to being assembled inside the containers 16, the internal fins 60 have a free height that is slightly larger than the internal width of the container 16. They may, for instance, be provided with a rounder profile than when inside the container as shown on Figure 5. So, when closing the container 16 the profile of the internal fins 60 self-adapts to a more square shape in contact with both sides of the container 16 providing optimum thermal contact with the container and, in doing so, optimum heat transfer to the PCM.

Thanks to this automatic width adjustment the three imperative contacts are ensured without creating internal strength and the brazing operation can perfectly join all the parts.

## Claims

1. A heat exchanger (10) for an air conditioning system, the heat exchanger (10) comprising plurality of parallel flat tubes (12) interconnected so that a refrigerant fluid is able to circulate inside the flat tubes (12) transferring from one to the other until exiting the heat exchanger (10) and comprising at least one container (16) interposed between two adjacent flat tubes (12) and in thermal contact with said adjacent flat tubes (12), a phase change material being arranged in the container (16),
**characterized in that** the container (16) is provided with a width adjusting mean (42, 56) so the thermal contact with the flat tubes (12) is optimized.

2. A heat exchanger (10) as set in the preceding claim wherein the container (16) comprises a first part having a first main wall (40) surrounded by a first peripheral end wall (42) and a second part having a second main wall (48) surrounded by a second peripheral end wall (50), the first and the second end walls overlapping so the width (w) of the container (16) measured over the two main walls (40, 48) is adjustable to the distance (d) between the two flat tubes (12) optimizing the thermal contact between the container (16) and the flat tubes (12).

3. A heat exchanger (10) as set in the preceding claim wherein the first and the second peripheral end walls (42, 50) have complementary inclined (A) surfaces (42, 56) for a mutual male-female engagement enabling adjustment of the width (w) of the container (16).

4. A heat exchanger (10) as set in claim 3 wherein the first peripheral wall (42) is outwardly inclined so slightly widening as extending from the first main wall (40) and,
the second peripheral wall (50) has substantially a U-shape comprising a foot portion (52) perpendicularly extending from the second main wall (48), continued in an outwardly curved portion (54) making almost a half-turn, ended in a straight final portion (56) extending from the curve (54) to a distal edge (58), the final section (56) being inclined (A) and slightly widening as extending from the curve (54) to the distal edge (58) for mutual male-female engagement enabling adjustment of the width (w) of the container (16).

5. A heat exchanger (10) as set in any of the claims 3 or 4 wherein the inclination (A) of the first and second peripheral wall, relative to the transverse axis (Y) is inferior to 20 degrees.

6. A heat exchanger (10) as set in any of the preceding claims further comprising a plurality of interconnected containers (16) enabling to fill all containers by pouring the phase change material in the liquid state in only one of them.

7. A heat exchanger (10) as set in claim 6 wherein the flat tubes (12) interconnect with each other along a transverse direction (Y) and, the containers (16) interconnect with each other via a passage that extends through the flat tubes (12) along the transverse direction (Y).

8. A heat exchanger (10) as set in any of the preceding claims wherein internal fins (60) are arranged inside the container in thermal contact with the first and the second main walls (40, 48), the dimension of the internal fins (60) self adjusting to the width adjustment of the container (16).

9. A heat exchanger (10) as set in any of the preceding claim wherein the tubes (12) and containers (16) are joined by brazing.

10. A heat exchanger (10) as set in any of the preceding claim wherein the phase change material absorbs energy and solidifies when the refrigerant circulates and restores the energy and liquefies when the refrigerant does not circulate.

11. Method for manufacturing a heat exchanger (10) for an air conditioning system, the method comprising the steps of:
- providing a plurality of flat tubes (12) able to be in fluid connection with each other,
- providing at least one container (16) having a width adjusting mean (42, 56) so as to be interposed between two adjacent flat tubes (12) and to be in thermal contact with them,
- spraying brazing flux on the flat tubes (12) and on the container (16),
- stacking the flat tubes (12) and the container (16) interposing the container between adjacent flat tubes,
- ensuring the overall length of the stack is slightly longer than the desired length of the finished heat exchanger (10),
- brazing the stack, the flux melting and the adjusting mean (42, 56) of the container enabling the stack to slightly adjust to the desired length.

12. Method as set in claim 11 wherein the step of providing a container (16) comprises the step of:
- forming in a short flat metal sheet (38) a concave area (40) with a flat bottom surrounded by an inclined (A) peripheral end wall (42),
- forming in a second short flat metal sheet (46) a concave area (48) with a flat bottom surrounded by a inclined (A) second peripheral wall (50) complementary to the end wall (42),
- forming, in each short metal sheet (38, 46), a connecting hole surrounded by a surface outwardly protruding from the concave area.
- forming a container (16) by arranging the short metal sheets (38, 46) face to face so the flat bottoms are distant from each other so, the concave areas defining an interior volume for the container (16), and the inclined end walls (42, 50) engaging in a male-female complementary match, the connecting holes outwardly protruding from the container (16).

13. Method as set in claim 12 wherein the steps of forming in a second short flat metal sheet (46) an inclined second peripheral wall (50), comprise the step of:
- forming the second peripheral wall (50) with a substantially U-shape having a foot portion (52) continued in an outwardly curved portion (54) making almost a half-turn and ended in a straight final portion (56) extending from the curve (54) to a distal edge (58), the final section (56) being inclined (A) and slightly widening as extending from the curve (54) to the distal edge (58).

14. Method as set in any of the claim 11 to 13 wherein the step of providing a container (16) comprises the step of:
- providing internal fins (60) having a free height larger than the internal dimension of the container,
- arranging the internal fins (60) inside the container (16) so to be in thermal contact with the container (16), the shape of the internal fins (60) self adapting to the internal dimension of the container (16).

15. Method as set in any of the claims 11 to 14 wherein the step of stacking-up the flat tubes (12) and the containers (16) is repeated so the stack comprises a plurality of tubes (12) and interposed containers (16).
